# FASCICULE DE BREVET EUROPEEN

(11) **EP 2 369 213 B1**
(45) Date de publication et mention de la délivrance du brevet: **17.07.2013**
(21) Numéro de dépôt: 11157689.8
(22) Date de dépôt: 10.03.2011
(51) Int. Cl.: F16L 33/24, F16L 37/084, F16L 37/098

(54) **Connectique rapide à tuyau encliquetable dans un raccord, et procédé de raccordement de ce tuyau à ce raccord**
RASTVERBINDBARE SCHLAUCHSCHNELLKUPPLUNG UND SCHLAUCHKUPPLUNGSMETHODE
QUICK CONNECTOR WITH SNAPABLE HOSE INTO A COUPLING, HOSE CONNECTING PROCESS THEREOF

(30) Priorité: 10.03.2010 FR 1000956
(43) Date de publication de la demande: 28.09.2011
(73) Titulaire: HUTCHINSON, 75008 Paris (FR)
(72) Inventeur: Gillet, Damien, 45220 Château-Renard (FR); Godeau, Denis, 45260 Vieilles Maisons Jourdy (FR)
(74) Mandataire: Bolinches, Michel Jean-Marie

(56) Documents cités:
- EP-A1- 0 606 028
- EP-A1- 1 191 268
- EP-A1- 1 380 791
- EP-A1- 1 770 321
- DE-A1-102005 060 135
- DE-A1-102008 016 449
- DE-A1-102008 052 449
- FR-A1- 2 726 068
- GB-A- 511 989
- US-A1- 2007 001 453

## Description

La présente invention concerne une connectique rapide notamment destinée à un transfert de fluide à basse pression et de type comprenant un tuyau présentant un renflement circonférentiel et un raccord dans lequel ce tuyau est encliquetable, et un procédé de raccordement par encliquetage d'un tel tuyau à ce raccord de connectique rapide. L'invention s'applique notamment à des canalisations en plastique de faible diamètre pour véhicules automobiles qui utilisent un tel tuyau de diamètre interne inférieur ou égal à 4 mm, et en particulier pour une ligne de circuit « SCR » (« selective catalytic reduction » en anglais pour réduction catalytique sélective).

D'une manière générale, les connectiques rapides des véhicules automobiles ont pour fonction de connecter les tuyaux de transfert de fluide aux organes du moteur. On peut par exemple se référer au document US-A-6 142 537, qui enseigne de raccorder un embout mâle muni d'un renflement circonférentiel à un connecteur, par encliquetage de deux pattes plates que l'on positionne au préalable à l'intérieur du connecteur et qui viennent traverser des lumières de celui-ci en butant axialement devant le renflement de cet embout suite à son insertion dans le connecteur.

On peut par ailleurs citer les connectiques rapides à raccord encliquetable entre un tuyau de fluide et un embout tubulaire rigide, qui sont présentées dans le document FR-A1-2 795 156 au nom de la Demanderesse, qui dévoile le préambule de la revendication 1. Ce raccord comprend notamment une douille en une première extrémité de laquelle est montée fixement ce tuyau, alors que l'embout tubulaire rigide est destiné à être raccordé via une collerette qu'il présente en une seconde extrémité de cette douille. Ce raccord est complété par un organe de verrouillage chevauchant la douille et coopérant avec la collerette de l'embout pour retenir ce dernier dans la douille, et avantageusement en outre par un dispositif témoin visuel adjacent qui coopère également avec la douille et cette collerette pour s'assurer de la bonne connexion entre l'embout et le raccord, comme illustré dans le document EP-B1-1 770 321 au nom de la Demanderesse.

Le raccordement entre le tuyau précité et la douille du raccord encliquetable peut être usuellement réalisé de quatre manières différentes :
- via une portion terminale de la douille en forme de queue de sapin, avec comme inconvénient une grande fragilité dans le cas d'un tuyau raccordé de faible diamètre interne (inférieur ou égal à 4 mm),
- via un sertissage, avec comme inconvénient un risque de déformation de ce tuyau de faible diamètre à l'interface avec la douille du fait que l'effort requis pour rétreindre la bague de sertissage est très élevé,
- via un collier de serrage, avec également comme inconvénient une déformation potentielle de ce tuyau du fait de l'effort exercé par le collier, ou bien
- via un soudage, ce qui peut générer des bavures de soudure indésirables pouvant obstruer ce tuyau de petit diamètre.

Les documents DE-A1-10 2008 052 449 et DE-A1-10 2008 016 449 présentent des connectiques rapides de type à raccord encliquetable et à coquille, laquelle vient s'encliqueter dans des lumières du raccord via des saillies respectivement formées dans des demi-coquilles et est rapportée sur un renflement d'un tuyau à connecter au raccord. Un inconvénient majeur de ces connectiques à coquille réside dans la structure asymétrique et relativement complexe de la coquille utilisée et donc dans la complexité relative de son procédé de fabrication, ainsi que dans l'encombrement relativement important de cette coquille et de la connectique l'incorporant.

Un but de la présente invention est de proposer une connectique rapide notamment pour un transfert de fluide à basse pression, cette connectique remédiant à ces inconvénients et comprenant :
(i) un tuyau qui présente un renflement circonférentiel pour son raccordement par encliquetage à une première extrémité d'un raccord ;
(ii) ce raccord encliquetable qui comporte :
   * une douille dont une première et une seconde extrémités femelles sont respectivement destinées à être raccordées à ce tuyau et à un embout tubulaire, et
   * un joint d'étanchéité adjacent à cette première extrémité qui est monté en butée radialement entre la douille et ce tuyau ; et
(iii) des moyens qui coopèrent avec ce renflement et avec des lumières formées dans la paroi de la douille à proximité de ladite première extrémité pour y raccorder le tuyau par encliquetage.

A cet effet, une connectique selon l'invention est telle que ces moyens comprenant une coquille qui est rapportée sur ledit renflement et qui vient s'encliqueter dans lesdites lumières lors du raccordement du tuyau à la douille en y étant montée adjacente au joint, de telle sorte que cette coquille bloque axialement le tuyau et le joint dans la douille, la coquille comportant des secteurs connectés entre eux et formant un corps creux globalement cylindrique ouvert en ses extrémités, chaque secteur présentant au moins une saillie radiale venant s'encliqueter dans l'une des lumières, ces saillies étant formées en un premier bord d'extrémité circonférentiel de la coquille qui est le plus axialement à l'intérieur de la douille suite audit raccordement, ces saillies étant alors situées axialement entre le joint et le renflement.

On notera que la connectique selon l'invention présente ainsi grâce à cette coquille une structure simplifiée et une compacité améliorée, notamment en comparaison de l'art antérieur défini par les documents précités DE-A1-10 2008 052 449 et DE-A1-10 2008 016 449 où les saillies de la coquille sont situées axialement à l'extérieur du joint et du renflement.

Avantageusement, lesdits secteurs peuvent être globalement en forme d'arcs de cylindre connectés deux à deux entre eux en des lignes de jonction axiales vis-à-vis du tuyau, et sont de préférence constitués de deux secteurs globalement en forme de demi-cylindres connectés l'un à l'autre suivant un plan de jonction axial vis-à-vis du tuyau.

Selon une autre caractéristique de l'invention, lesdits secteurs peuvent être munis d'organes de connexion mutuelle par exemple de type mâle/ femelle et peuvent être aptes à enserrer ledit renflement en recouvrant le tuyau axialement de part et d'autre de ce renflement.

Avantageusement, ladite coquille peut comporter :
- une face radialement interne avec une gorge circonférentielle axialement médiane conçue pour épouser la surface convexe dudit renflement, et deux portées circonférentielles plates en section axiale conçues pour recouvrir le tuyau de part et d'autre de ce renflement, et
- une face radialement externe où sont formées lesdites saillies radiales sous forme de nervures en arcs de cercle qui sont espacées entre elles dans la direction circonférentielle de la coquille et qui sont destinées à se trouver axialement en regard desdites lumières lors du raccordement du tuyau à la douille.

Selon un exemple de réalisation de l'invention, chaque secteur présente en outre au moins une protubérance radiale apte à être montée en appui sous un rebord de ladite première extrémité de la douille, la coquille présentant ces protubérances en son second bord d'extrémité circonférentiel qui est opposé audit premier bord.

Avantageusement, le tuyau et ladite coquille peuvent être chacun réalisés en un matériau plastique ou élastomère thermoplastique, et le tuyau peut être recouvert d'une gaine de préférence thermiquement isolante, axialement vers l'extérieur dudit renflement par rapport à la douille.

Selon une autre caractéristique de l'invention, la connectique rapide peut comprendre en outre un manchon radialement externe surmoulé ou rapporté qui relie ladite gaine au raccord encliquetable, de sorte à bloquer le tuyau dans une position angulaire donnée dans ce raccord et à assurer l'étanchéité externe de la connectique.

Selon un mode de réalisation de l'invention, ce manchon peut recouvrir successivement par surmoulage, axialement de l'extérieur vers l'intérieur de la douille, ladite gaine, une portion du tuyau qui en est dépourvue, un bord d'extrémité de ladite coquille et une zone de la face radialement externe de la douille surmontant lesdites lumières.

Selon une autre caractéristique de l'invention, ledit raccord encliquetable peut comprendre en outre, à proximité de ladite seconde extrémité de la douille, un organe de verrouillage qui est monté sur la douille et qui est destiné à coopérer avec une collerette dudit embout tubulaire pour retenir cet embout dans la douille, et optionnellement un dispositif témoin visuel qui est destiné à coopérer avec cette collerette pour marquer la bonne connexion de l'embout dans la douille et qui est supporté par cette dernière en étant placé axialement derrière l'organe de verrouillage suivant la direction d'introduction de l'embout dans la douille, ce dispositif témoin étant apte à occuper plusieurs positions de montage incluant une position sortie où il dépasse radialement de la douille et une position rentrée où il y est escamoté.

Un procédé de raccordement par encliquetage selon l'invention d'un tuyau présentant un renflement circonférentiel à une première extrémité femelle d'une douille d'un raccord de connectique rapide notamment destinée à un transfert de fluide à basse pression, cette douille comportant un joint d'étanchéité adjacent à cette première extrémité qui est monté en butée radialement entre la douille et le tuyau, des lumières étant formées dans la paroi de la douille à proximité de cette première extrémité pour y raccorder le tuyau par encliquetage, est caractérisé en ce qu'il comprend l'insertion, axialement vers l'intérieur de cette première extrémité de douille, du renflement préalablement enserré dans une coquille comportant des secteurs connectés entre eux et formant un corps creux globalement cylindrique ouvert en ses extrémités, jusqu'à ce qu'au moins une saillie radiale de chaque secteur formée en un premier bord d'extrémité circonférentiel de la coquille vienne s'encliqueter dans l'une de ces lumières en étant montée adjacente au joint et bloque ainsi axialement le tuyau et ce joint dans la douille, ce premier bord de coquille étant alors le plus axialement à l'intérieur de la douille et ces saillies étant situées axialement entre le joint et le renflement.

Selon une autre caractéristique de l'invention, ce procédé de raccordement peut comprendre, préalablement à cette insertion, l'assemblage de ladite coquille autour et axialement de part et d'autre dudit renflement par la connexion mutuelle desdits secteurs, qui sont de préférence globalement en forme d'arcs de cylindre par exemple au nombre de deux, et avec des saillies radiales venant s'encliqueter dans lesdites lumières.

Avantageusement, ce procédé de raccordement peut comprendre en outre, suite à l'encliquetage du tuyau dans la douille, un montage rapporté ou un surmoulage d'un manchon radialement externe qui relie une gaine du tuyau au raccord encliquetable, de sorte à bloquer le tuyau dans une position angulaire donnée dans ce raccord et à assurer l'étanchéité externe de la connectique.

D'autres caractéristiques, avantages et détails de la présente invention ressortiront à la lecture de la description suivante d'un exemple de réalisation de l'invention, donné à titre illustratif et non limitatif, la description étant réalisée en référence avec les dessins joints, parmi lesquels :
la figure 1 est une vue en perspective éclatée d'une connectique rapide à tuyau encliquetable dans un raccord, selon un exemple de réalisation de l'invention,
la figure 2 est une vue en perspective assemblée de la coquille à deux secteurs montrée en vue éclatée à la figure 1 qui est destinée à renfermer le renflement du tuyau,
la figure 3 est une vue en perspective de l'un des deux secteurs formant la coquille de la figure 2, selon une variante de ceux de la figure 1,
la figure 4 est une vue en coupe axiale de la connectique de la figure 1 en position assemblée, suivant le plan de coupe IV-IV de la figure 1 pour la coquille, et
la figure 5 est une vue en coupe axiale de la connectique de la figure 1 en position assemblée, suivant le plan de coupe V-V de la figure 1 pour la coquille, qui est perpendiculaire au plan de coupe IV-IV.

Dans la description qui suit, on a utilisé de manière usuelle les expressions « axialement vers l'intérieur » et « axialement vers l'extérieur » pour préciser la position d'un élément de la connectique respectivement au-delà et en deçà de l'extrémité de raccordement correspondante, dans la direction axiale commune aux différents éléments de cette connectique.

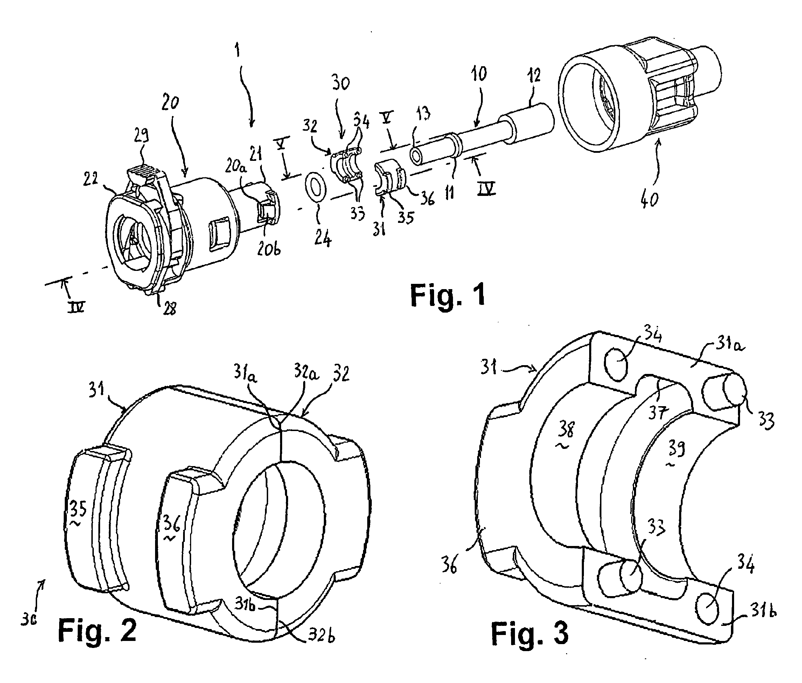

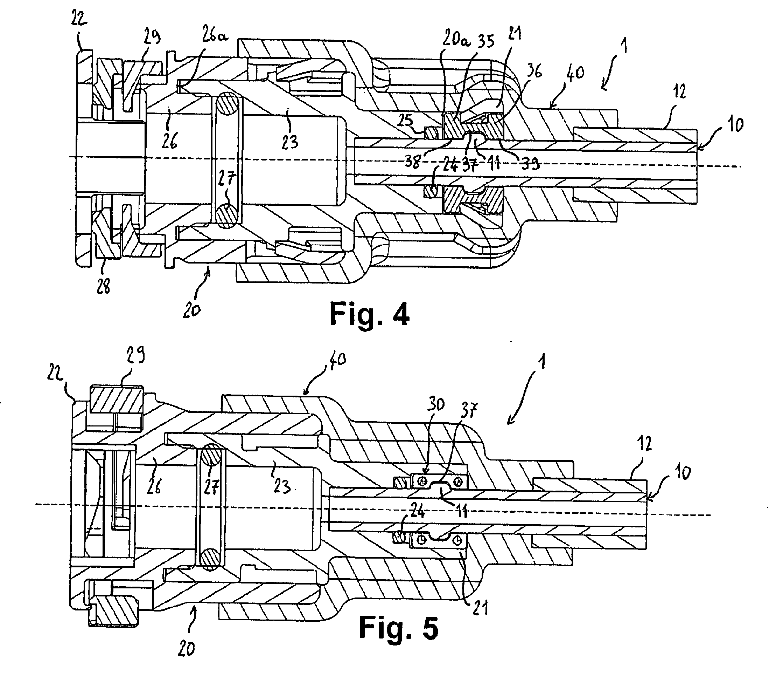

La connectique rapide 1 illustrée à la figure 1 comprend essentiellement :
a) un tuyau 10 (de diamètre interne inférieur ou égal à 4 mm et par exemple à base d'un polyamide ou d'un élastomère thermoplastique) qui présente un renflement circonférentiel 11 par exemple en forme de bulbe pour son raccordement par encliquetage à une première extrémité femelle 21 d'un raccord 20 et qui est recouvert d'une gaine 12 thermiquement isolante de type plastique ou élastomère et s'étendant axialement vers l'extérieur du renflement 11 par rapport à l'extrémité de raccordement 13 du tuyau 10 ;
b) ce raccord encliquetable 20 de type douille, dont les première et seconde extrémités femelles 21 et 22 sont respectivement destinées à être raccordées au tuyau 10 et à un embout tubulaire rigide (non illustré), et qui comporte :
   * un premier connecteur 23 (voir figures 4 et 5) adjacent au tuyau 10 et incorporant un premier joint d'étanchéité 24 par exemple torique, qui est monté contre un épaulement radial 25 de sa face interne à proximité de la première extrémité 21 du raccord 20 (confondue avec celle du connecteur 23), radialement entre ce connecteur 23 et le tuyau 10, et
   * un second connecteur 26 (voir figures 4 et 5) adjacent à l'embout qui est raccordé au premier connecteur 23 avec interposition d'un second joint d'étanchéité 27 et qui supporte de manière axialement accolée, à proximité de la seconde extrémité 22 du raccord 20 (confondue avec celle du connecteur 26) un organe de verrouillage 28 et un dispositif témoin de bonne connexion 29 tous deux en forme de cavaliers destinés à coopérer avec une collerette de l'embout pour le retenir dans le raccord 20 et marquer visuellement sa bonne connexion, respectivement ;
c) une coquille 30 qui est rapportée sur le tuyau 10 en enserrant le renflement 11 et qui vient s'encliqueter dans des lumières 20a formées dans la paroi du premier connecteur 23 axialement vers l'extérieur du premier joint 24 pour y raccorder le tuyau 10 par encliquetage ; et
d) un manchon 40 radialement externe en matière plastique ou élastomère par exemple surmoulée, qui relie la gaine 12 au raccord 20 de sorte à bloquer le tuyau 10 dans une position angulaire donnée dans ce raccord 20 et à assurer l'étanchéité externe de la connectique 1.

Les connecteurs 23 et 26 sont solidarisés l'un avec l'autre dans cet exemple de réalisation par une insertion, dans la direction axiale, du premier connecteur 23 au fond d'une gorge circonférentielle 26a (voir figures 4 et 5) formée dans le second connecteur 26 entre deux portions axiales de ce dernier. Quant au dispositif témoin 29, il est positionné axialement derrière l'organe de verrouillage 28, suivant la direction d'introduction de l'embout dans ce connecteur 26. On pourra par exemple utiliser pour ce dispositif témoin 29 celui décrit dans le Brevet EP-B1-1 770 321 ou dans la Demande de Brevet déposée sous le n° FR0902113, tous deux au nom de la Demanderesse.

Selon l'invention, la coquille 30 comporte deux secteurs 31 et 32 globalement en forme de demi-cylindres connectés l'un à l'autre via les deux bords 31 a et 31 b, 32a et 32b de chaque secteur 31, 32, lesquels bords s'étendent à la fois dans les directions axiale et radiale et présentent par exemple des plots 33 et des orifices 34 conçus pour les recevoir, de sorte que ces deux secteurs 31 et 32 ainsi plaqués bord 31 a, 31 b contre bord 32a, 32b forment un corps creux globalement cylindrique ouvert en ses extrémités qui recouvre le tuyau 10 axialement de part et d'autre de son renflement 11 (dans l'exemple de la figure 1, deux plots 33 sont formés en un même bord 31 b, 32b de chaque secteur 31, 32, alors qu'à la figure 3, les deux plots 33 de chaque secteur 31, 32 sont formés aux extrémités axiales opposées de ses deux bords 31a et 31 b). Le plan de jonction axial de ces deux secteurs 31 et 32 est visible à la figure 5, avec ces plots 33 et orifices 34.

Plus précisément et comme notamment visible aux figures 2 et 4, chaque secteur 31, 32 présente sur sa face radialement externe deux nervures radiales en arc de cercle 35 et 36 qui sont respectivement formées en ses bords axiaux d'extrémités, dont l'une axialement interne ou nervure d'encliquetage 35 est conçue pour venir s'encliqueter dans une lumière traversante 20a en forme de « [» (définie autour d'une patte rectangulaire d'encliquetage 20b s'étendant à partir de la première extrémité 21 du raccord 20), et dont l'autre axialement externe ou nervure d'appui 36 est conçue pour se caler radialement sous et au contact d'un rebord de cette première extrémité 21. Quant à la face radialement interne de chaque secteur 31, 32, elle présente une gorge circonférentielle axialement médiane 37 en U évasé conçue pour épouser la surface en forme de bulbe du renflement 11 et, axialement de part et d'autre de cette gorge 37, deux portées circonférentielles 38 et 39 de section axiale plate conçues pour recouvrir le tuyau 10.

En d'autres termes et comme illustré à la figure 4, chaque secteur 31, 32 présente sensiblement une forme de « H », vu en section axiale dans un plan longitudinal médian normal à ces nervures 35 et 36.

Les deux nervures axialement internes d'encliquetage 35 ainsi formées sur les deux secteurs 31 et 32 assemblés de la coquille 30 sont espacées entre elles dans la direction circonférentielle de la coquille 30 et elles sont respectivement destinées à s'encliqueter dans les deux zones en arc de cercle des lumières 20a en « [» (i.e. chaque branche verticale visible à la figure 1) lors du raccordement du tuyau 10, ces nervures 35 se trouvant alors bloquées axialement entre le premier joint 24 et le renflement 11.

Lors de l'insertion du renflement 11 muni de la coquille 30 à l'intérieur du connecteur 23, on comprend que cette coquille 30 bloque axialement le tuyau 10 et donc le joint 24 en vis-à-vis dans le raccord 20.

Les figures 4 et 5 illustrent en particulier la géométrie du manchon 40 qui relie la gaine 12 au raccord 20 de sorte à bloquer le tuyau 10 en rotation dans ce raccord 20. On voit que ce manchon 40, formé d'un seul tenant de préférence par surmoulage et à symétrie de révolution, recouvre successivement, axialement de l'extérieur vers l'intérieur du raccord 20 :
- Une zone d'extrémité de la gaine 12,
- la portion du tuyau 10 qui en est dépourvue axialement vers l'extérieur de la coquille 30 (i.e. entre la gaine 12 et la coquille 30),
- le bord d'extrémité radial de la coquille 30 qui est adjacent aux nervures 36, et
- une zone de la face radialement externe du raccord 20 qui surmonte ses lumières 20a et qui se termine par une partie du second connecteur 26.

Comme indiqué précédemment, ce manchon 40 associé à la coquille 30 permet ainsi de bloquer angulairement le tuyau 10 - déjà bloqué axialement par la coquille 30 - dans le raccord 20, tout en assurant l'étanchéité de la connectique 1 vis-à-vis de l'extérieur.

## Revendications

1. Connectique rapide (1) notamment destinée à un transfert de fluide à basse pression, la connectique comprenant :
(i) un tuyau (10) qui présente un renflement circonférentiel (11) pour son raccordement par encliquetage à une première extrémité (21) d'un raccord ;
(ii) ce raccord encliquetable qui comporte :
* une douille (20) dont une première et une seconde extrémités femelles (21 et 22) sont respectivement destinées à être raccordées à ce tuyau (10) et à un embout tubulaire, et
* un joint d'étanchéité (24) adjacent à cette première extrémité (21) qui est monté en butée radialement entre la douille (20) et ce tuyau (10); et
(iii) des moyens (30) qui coopèrent avec ce renflement (11) et avec des lumières (20a) formées dans la paroi de la douille (20) a proximité de ladite première extrémité (21) pour y raccorder le tuyau (10) par encliquetage,
**caractérisée en ce que** lesdits moyens comprennent une coquille (30) qui est rapportée sur ledit renflement (11) et qui vient s'encliqueter dans lesdites lumières (20a) lors du raccordement du tuyau (10) à la douille (20) en y étant montée adjacente au joint (24), de telle sorte que cette coquille (30) bloque axialement le tuyau (10) et le joint (24) dans la douille (20), la coquille (30) comportant des secteurs (31 et 32) connectés entre eux et formant un corps creux globalement cylindrique ouvert en ses extrémités, chaque secteur présentant au moins une saillie radiale (35) venant s'encliqueter dans l'une des lumières, (20a) ces saillies (35) étant formées en un premier bord d'extrémité circonférentiel de la coquille (30) qui est le plus axialement à l'intérieur de la douille (20) suite audit raccordement, ces saillies (35) étant alors situées axialement entre le joint (24) et le renflement (11).

2. Connectique rapide (1) selon la revendication 1, **caractérisée en ce que** lesdits secteurs (31 et 32) sont globalement en forme d'arcs de cylindre connectés deux à deux entre eux en des lignes de jonction (31a, 31b et 32a, 32b) axiales vis-à-vis du tuyau (10), et sont de préférence constitués de deux secteurs globalement en forme de demi-cylindres connectés l'un à l'autre suivant un plan de jonction axial vis-à-vis du tuyau.

3. Connectique rapide (1) selon la revendication 1 ou 2, **caractérisée en ce que** lesdits secteurs (31 et 32) sont munis d'organes de connexion mutuelle (33, 34) par exemple de type mâle/ femelle et sont aptes à enserrer ledit renflement (11) en recouvrant le tuyau (10) axialement de part et d'autre de ce renflement.

4. Connectique rapide (1) selon une des revendications précédentes, **caractérisée en ce que** ladite coquille (30) comporte :
- une face radialement interne avec une gorge circonférentielle (37) axialement médiane conçue pour épouser la surface convexe dudit renflement (11), et deux portées circonférentielles (38 et 39) plates en section axiale conçues pour recouvrir le tuyau (10) de part et d'autre de ce renflement, et
- une face radialement externe où sont formées lesdites saillies radiales (35) sous forme de nervures en arcs de cercle qui sont espacées entre elles dans la direction circonférentielle de la coquille et qui sont destinées à se trouver axialement en regard desdites lumières (20a) lors du raccordement du tuyau à la douille (20).

5. Connectique rapide (1) selon une des revendications précédentes, **caractérisée en ce que** chaque secteur (31, 32) présente en outre au moins une protubérance radiale (36) apte à être montée en appui sous un rebord de ladite première extrémité (21) de la douille (20), la coquille (30) présentant ces protubérances en son second bord d'extrémité circonférentiel qui est opposé audit premier bord.

6. Connectique rapide (1) selon une des revendications précédentes, **caractérisée en ce que** le tuyau (10) et ladite coquille (30) sont chacun réalisés en un matériau plastique ou élastomère thermoplastique, et **en ce que** le tuyau est recouvert d'une gaine (12) de préférence thermiquement isolante, axialement vers l'extérieur dudit renflement (11) par rapport à la douille (20).

7. Connectique rapide (1) selon la revendication 6, **caractérisée en ce qu'**elle comprend en outre un manchon (40) radialement externe surmoulé ou rapporté qui relie ladite gaine (12) au raccord encliquetable, de sorte à bloquer le tuyau (10) dans une position angulaire donnée dans ce raccord et à assurer l'étanchéité externe de la connectique.

8. Connectique rapide (1) selon la revendication 7, **caractérisée en ce que** ledit manchon (40) recouvre successivement par surmoulage, axialement de l'extérieur vers l'intérieur de la douille (20), ladite gaine (12), une portion du tuyau (10) qui en est dépourvue, un bord d'extrémité (36) de ladite coquille (30) et une zone de la face radialement externe de la douille surmontant lesdites lumières (20a).

9. Connectique rapide (1) selon une des revendications précédentes, **caractérisée en ce que** le raccord encliquetable comprend en outre, à proximité de ladite seconde extrémité (22) de la douille, un organe de verrouillage (28) qui est monté sur la douille (20) et qui est destiné à coopérer avec une collerette dudit embout tubulaire pour retenir cet embout dans la douille, et optionnellement un dispositif témoin visuel (29) qui est destiné à coopérer avec cette collerette pour marquer la bonne connexion de l'embout dans la douille et qui est supporté par cette dernière en étant placé axialement derrière l'organe de verrouillage suivant la direction d'introduction de l'embout dans la douille, ce dispositif témoin étant apte à occuper plusieurs positions de montage incluant une position sortie où il dépasse radialement de la douille et une position rentrée où il y est escamoté.

10. Procédé de raccordement par encliquetage d'un tuyau (10) présentant un renflement circonférentiel (11) à une première extrémité femelle (21) d'une douille (20) d'un raccord de connectique rapide (1) notamment destinée à un transfert de fluide à basse pression, cette douille comportant un joint d'étanchéité (24) adjacent à cette première extrémité qui est monté en butée radialement entre la douille et le tuyau, des lumières (20a) étant formées dans la paroi de la douille à proximité de cette première extrémité pour y raccorder le tuyau par encliquetage, **caractérisé en ce qu'**il comprend l'insertion, axialement vers l'intérieur de cette première extrémité de douille, dudit renflement préalablement enserré dans une coquille (30) comportant des secteurs (31 et 32) connectés entre eux et formant un corps creux globalement cylindrique ouvert en ses extrémités, jusqu'à ce qu'au moins une saillie radiale (35) de chaque secteur formée en un premier bord d'extrémité circonférentiel de la coquille vienne s'encliqueter dans l'une de ces lumières en étant montée adjacente au joint et bloque ainsi axialement le tuyau et ce joint dans la douille, ce premier bord de coquille étant alors le plus axialement à l'intérieur de la douille et ces saillies étant situées axialement entre le joint et le renflement.

11. Procédé de raccordement selon la revendication 10, **caractérisé en ce qu'**il comprend, préalablement à cette insertion, l'assemblage de ladite coquille (30) autour et axialement de part et d'autre dudit renflement (11) par la connexion mutuelle desdits secteurs (31 et 32), qui sont de préférence globalement en forme d'arcs de cylindre par exemple au nombre de deux.

12. Procédé de raccordement selon la revendication 10 ou 11, **caractérisé en ce qu'**il comprend, suite à l'encliquetage du tuyau (10) dans la douille (20), un montage rapporté ou un surmoulage d'un manchon (40) radialement externe qui relie une gaine (12) du tuyau au raccord encliquetable, de sorte à bloquer le tuyau dans une position angulaire donnée dans ce raccord et à assurer l'étanchéité externe de la connectique (1).

## Patentansprüche

1. Schnellverbindung (1), insbesondere bestimmt für einen Transfer von Niederdruckfluid, wobei die Verbindung umfasst:
(i) einen Schlauch (10), welcher eine Umfangsverdickung (11) für seinen Anschluss durch Einrastung an einem ersten Ende (21) eines Anschlusses aufweist;
(ii) wobei dieser einrastbare Anschluss umfasst:
• eine Hülse (20), von welcher ein erstes und ein zweites seitliches Ende (21 und 22) jeweils dazu bestimmt sind, an diesem Schlauch (10) bzw. an einem röhrenförmigen Ansatzstück angeschlossen zu werden, und
• eine Dichtung (24) benachbart zu diesem ersten Ende (21), welches im Anschlag radial zwischen der Hülse (20) und diesem Schlauch (10) angebracht ist; und
(iii) Mittel (30), welche mit der Verdickung (11) und mit Öffnungen (20a) zusammenwirken, welche in der Wand der Hülse (20) in der Nähe des ersten Endes (21) ausgebildet sind, um daran den Schlauch (10) durch Einrasten anzuschließen,
**dadurch gekennzeichnet, dass** die Mittel eine Schale (30) umfassen, welche an der Verdickung (11) angebracht ist und welche bei dem Anschließen des Schlauchs (10) an der Hülse (20) in den Öffnungen (20a) einrastet, wobei sie dabei benachbart zu der Dichtung (24) angebracht ist, sodass diese Schale (30) den Schlauch (10) und die Dichtung (24) in der Hülse (20) axial blockiert, wobei die Schale (30) Sektoren (31 und 32) umfasst, welche untereinander verbunden sind und einen an seinen Enden offenen allgemein zylindrischen Hohlkörper bilden, wobei jeder Sektor wenigstens einen radialen Vorsprung (35) aufweist, welcher in einer der Öffnungen (20a) einrastet, wobei diese Vorsprünge (35) gebildet sind an einem ersten Umfangsendrand der Schale (30), welcher nach dem Anschließen am Weitesten im Inneren der Hülse (20) ist, wobei diese Vorsprünge (35) sich dann axial zwischen der Dichtung (24) und der Verdickung (11) befinden.

2. Schnellverbindung (1) nach Anspruch 1, **dadurch gekennzeichnet, dass** die Sektoren (31 und 32) allgemein in Form von Zylinderbögen sind, welche paarweise untereinander über axiale Verbindungslinien (31a, 31b und 32a, 32b) gegenüber dem Schlauch (10) verbunden sind, und bevorzugt gebildet sind aus zwei Sektoren von allgemein halbzylindrischer Form, welche miteinander entlang einer axialen Verbindungsebene gegenüber dem Schlauch verbunden sind.

3. Schnellverbindung nach Anspruch 1 oder 2, **dadurch gekennzeichnet, dass** die Sektoren (31 und 32) mit Einrichtungen zur wechselseitigen Verbindung (33, 34) versehen sind, beispielsweise vom Männlich/Weiblich-Typ dazu ausgestaltet sind, die Verdickung (11) einzuspannen, wobei sie den Schlauch (10) axial auf beiden Seiten dieser Verdickung bedecken.

4. Schnellverbindung (1) nach einem der vorhergehenden Ansprüche, **dadurch gekennzeichnet, dass** die Schale (30) umfasst :
- eine radial innere Seite mit einer axial mittigen Umfangskehle (37), welche dazu ausgestaltet ist, sich an die konvexe Oberfläche der Verdickung (11) anzupassen, und zwei im axialen Schnitt flache Umfangsauflageflächen (38 und 39), welche dazu ausgestaltet sind, den Schlauch (10) auf beiden Seiten dieser Verdickung aufzunehmen, und
- eine radial äußere Seite, wo die radialen Vorsprünge (35) in Form von Kreisbogenrippen ausgebildet sind, welche untereinander in der Umfangsrichtung der Schale beabstandet sind und welche dazu bestimmt sind, sich bei dem Anschließen des Schlauchs an der Hülse (20) axial gegenüber den Öffnungen (20a) zu befinden.

5. Schnellverbindung nach einem der vorhergehenden Ansprüche, **dadurch gekennzeichnet, dass** jeder Sektor (31, 32) außerdem wenigstens eine radiale Ausstülpung (36) aufweist, welche dazu bestimmt ist, im Anschlag an einem Rand des ersten Endes (21) der Hülse (20) angebracht zu werden, wobei die Schale (30) diese Ausstülpungen an ihrem zweiten Umfangsendrand aufweist, welcher dem ersten Rand entgegengesetzt ist.

6. Schnellverbindung (1) nach einem der vorhergehenden Ansprüche, **dadurch gekennzeichnet, dass** der Schlauch (10) und die Schale (30) jeweils aus einem Kunststoffmaterial oder elastomeren Thermoplasten realisiert sind, und dass der Schlauch axial in Richtung der Außenseite der Verdickung (11) bezüglich der Hülse (20) mit einer bevorzugt thermisch isolierenden Hülle (12) bedeckt ist.

7. Schnellverbindung (1) nach Anspruch 6, **dadurch gekennzeichnet, dass** sie außerdem eine angeformte oder angestückte radial äußere Muffe (40) umfasst, welche die Hülle (12) an dem einrastbaren Anschluss anbringt, sodass der Schlauch (10) in einer gegebenen Winkelposition in diesem Anschluss blockiert wird und die äußere Dichtigkeit der Verbindung gewährleistet wird.

8. Schnellverbindung (1) nach Anspruch 7, **dadurch gekennzeichnet, dass** die Muffe (40) nacheinander durch Anformen, axial von der Außenseite in Richtung der Innenseite der Hülse (20), die Hülle (12), einen Abschnitt des Schlauches (10), welcher ohne diese ist, einen Endrand (36) der Schale (30) und einen Bereich der radial äußeren Seite der Hülse, welcher sich über die Öffnungen (20a) erhebt, bedeckt.

9. Schnellverbindung (1) nach einem der vorhergehenden Ansprüche, **dadurch gekennzeichnet, dass** der einrastbare Anschluss außerdem in der Nähe des zweiten Endes (22) der Hülse eine Verriegelungseinrichtung (28), welche an der Hülse (20) angebracht ist und welche dazu bestimmt ist, mit einem Kragen des röhrenförmigen Ansatzstücks zusammenzuwirken, um dieses Ansatzstück in der Hülse zu halten, und optional eine Vorrichtung zur visuellen Kontrolle (29) umfasst, welche dazu bestimmt ist, mit diesem Kragen zusammenzuwirken, um die gute Verbindung des Ansatzstücks in der Hülse anzuzeigen, und welche von der Letzteren gehalten wird, wobei sie entlang der Einführungsrichtung des Ansatzstücks in der Hülse axial hinter der Verriegelungseinrichtung angeordnet ist, wobei diese Überprüfungsvorrichtung dazu ausgestaltet ist, mehrere Montagepositionen einzunehmen, welche eine Ausgangsposition, in welcher sie radial über die Hülse hinausragt, und eine Rückzugsposition, in welcher sie zurückgezogen ist, beinhalten.

10. Verfahren zum Anschließen durch Einrasten eines Schlauches (10), welcher eine Umfangsverdickung (11) aufweist, an einem weiblichen ersten Ende (21) einer Hülse (20) eines Schnellverbindungsanschlusses (1), insbesondere bestimmt für einen Transfer von Niederdruckfluid, wobei diese Hülse eine Dichtung (24) benachbart zu diesem ersten Ende umfasst, welche im Anschlag radial zwischen der Hülse und dem Schlauch angebracht ist, wobei Öffnungen (20a) in der Wand der Hülse in der Nähe dieses ersten Endes ausgebildet sind, um darin den Schlauch durch Einrasten anzuschließen, umfasst, **dadurch gekennzeichnet, dass** es das Einsetzen, axial in Richtung der Innenseite des ersten Endes der Hülse, der Verdickung umfasst, welche vorab in einer Schale (30) eingespannt ist, welche Sektoren (31 und 32) umfasst, welche untereinander verbunden sind und einen an seinen Enden offenen allgemein zylindrischen Hohlkörper bilden, bis wenigstens ein radialer Vorsprung (35) jedes Sektors, welcher an einem ersten Umfangsendrand der Schale ausgebildet ist, in einer der Öffnungen einrastet und benachbart zu der Dichtung angebracht ist und somit axial den Schlauch und diese Dichtung in der Hülse blockiert, wobei der erste Rand der Schale auf diese Weise axial am weitesten im Inneren der Hülse ist und diese Vorsprünge sich axial zwischen der Dichtung und der Verdickung befinden.

11. Anschlussverfahren nach Anspruch 10, **dadurch gekennzeichnet, dass** es vor diesem Einsetzen das Zusammenfügen der Schale (30) um die und axial auf beiden Seiten der Verdickung (11) durch wechselseitige Verbindung der Sektoren (31 und 32) umfasst, welche bevorzugt allgemein in Form von Zylinderbögen, beispielsweise mit der Anzahl zwei sind.

12. Anschlussverfahren nach Anspruch 10 oder 11, **dadurch gekennzeichnet, dass** es nach dem Einrasten des Schlauches (10) in der Hülse (20) eine angestückte oder angeformte Anbringung einer radial äußeren Muffe (40) umfasst, welche eine Hülle (12) des Schlauches mit dem einrastbaren Anschluss verbindet, sodass der Schlauch in einer gegebenen Winkelposition in diesem Anschluss blockiert wird und die äußere Dichtigkeit der Verbindung (1) gewährleistet wird.

## Claims

1. Quick connection system (1), in particular designed for conveying fluid at low pressure, the connection system comprising:
(i) a pipe (10) having a circumferential thickened region (11) to enable it to be connected to a first end (21) of a connector fitting by a snapping action;
(ii) this snap-on connector fitting comprising:
- a socket (20), first and second female ends (21 and 22) of which are respectively designed to be connected to this pipe (10) and to a tubular end fitting, and
- a seal (24) adjacent to this first end (21), which is mounted in an abutting arrangement radially between the socket (20) and this pipe (10); and
(iii) means (30) co-operating with this thickened region (11) and with orifices (20a) formed in the wall of the socket (20) close to said first end (21) to enable the pipe (10) to be connected there by a snapping action,
**characterised in that** said means comprise a shell (30) which is fitted on said thickened region (11) and which snaps into said orifices (20a) when the pipe (10) is connected to the socket (20), being mounted there adjacent to the seal (24) so that this shell (30) axially blocks the pipe (10) and the seal (24) in the socket (20), the shell (30) comprising sectors (31 and 32) connected to one another and forming a generally cylindrical hollow body open at its ends, each sector having at least one radial projection (35) which snaps into one of the orifices (20a), these projections (35) being formed at a first circumferential terminal edge of the shell (30) which is disposed the farthest axially in the interior of the socket (20) following said connection, these projections (35) then being disposed axially between the seal (24) and the thickened region (11).

2. Quick connection system (1) as claimed in claim 1, **characterised in that** said sectors (31 and 32) generally have the shape of cylinder arcs connected to one another in pairs at axial joint lines (31a, 31b and 32a, 32b) relative to the pipe (10), and are preferably made up of two sectors generally having the shape of half-cylinders connected to one another along an axial joint plane relative to the pipe.

3. Quick connection system (1) as claimed in claim 1 or 2, **characterised in that** said sectors (31 and 32) are provided with mutual connection members (33, 34), for example of the male/female type, and are designed to clamp said thickened region (11) covering the pipe (10) axially on either side of this thickened region.

4. Quick connection system (1) as claimed in one of the preceding claims, **characterised in that** said shell (30) comprises:
- a radially inner face with an axially median circumferential neck (37) designed to conform to the convex surface of said thickened region (11), and two circumferential seats (38 and 39) of a flat design in axial section for covering the pipe (10) on either side of this thickened region, and
- a radially outer face in which said radial projections (35) are disposed in the form of ribs of a circle arc shape which are spaced apart from one another in the circumferential direction of the shell and which are designed so as to be disposed axially facing said orifices (20a) when the pipe is connected to the socket (20).

5. Quick connection system (1) as claimed in one of the preceding claims, **characterised in that** each sector (31, 32) also has at least one radial protuberance (36) designed to be fitted so as to bear under an edge of said first end (21) of the socket (20), the shell (30) having these protuberances at its second circumferential terminal edge opposing said first edge.

6. Quick connection system (1) as claimed in one of the preceding claims, **characterised in that** the pipe (10) and said shell (30) are each made from a plastic material or thermoplastic elastomer, and the pipe is covered by a preferably heat insulating sheath (12) disposed axially towards the exterior of said thickened region (11) by reference to the socket (20).

7. Quick connection system (1) as claimed in claim 6, **characterised in that** it further comprises a radially outer overmoulded or fitted sleeve (40) linking said sheath (12) to the snap-on connector fitting so as to block the pipe (10) in a given angular position in this connector fitting and afford an external seal of the connection system.

8. Quick connection system (1) as claimed in claim 7, **characterised in that** said sleeve (40) is overmoulded so as to cover in succession, axially from the exterior to the interior of the socket (20), said sheath (12), a portion of the pipe (10) not provided with the latter, a terminal edge (36) of said shell (30) and a zone of the radially outer face of the socket mounted over said orifices (20a).

9. Quick connection system (1) as claimed in one of the preceding claims, **characterised in that** the snap-on connector fitting further comprises, close to said second end (22) of the socket, a locking element (28) which is mounted on the socket (20) and which is designed to co-operate with a collar of said tubular end fitting in order to retain this end fitting in the socket, and optionally a visual inspection device (29) designed to co-operate with this collar to indicate that the end fitting has been correctly connected in the socket, and which is supported by the latter, being positioned axially behind the locking element in the direction in which the end fitting is introduced into the socket, this inspection device being designed to occupy several mounting positions, including an extracted position in which it extends radially beyond the socket and an inserted position in which it is retracted into it.

10. Method of connecting a pipe (10) with a circumferential thickened region (11) to a first female end (21) of a socket (20) of a connector fitting of a quick connection system (1) by a snapping action, in particular designed for conveying fluid at low pressure, this socket having a seal (24) adjacent to this first end which is mounted in an abutting arrangement radially between the socket and the pipe, orifices (20a) being provided in the wall of the socket close to this first end to enable the pipe to be connected there by a snapping action, **characterised in that** it comprises inserting, axially towards the interior of this first socket end, said thickened region clamped beforehand in a shell (30) comprising sectors (31 and 32) connected to one another and forming a hollow, generally cylindrical body open at its ends, until at least one radial projection (35) of each sector disposed in a first circumferential terminal edge of the shell snaps into one of these orifices so as to be mounted adjacent to the seal and thus axially block the pipe and this seal in the socket, this first shell edge then being disposed the farthest axially towards the interior of the socket and these projections being disposed axially between the seal and the thickened region.

11. Connecting method as claimed in claim 10, **characterised in that** it comprises, prior to this insertion, assembling said shell (30) around and axially on either side of said thickened region (11) by mutually connecting said sectors (31 and 32), which preferably have the general shape of cylinder arcs, there being two in number for example.

12. Connection method as claimed in claim 10 or 11, **characterised in that** it comprises, after having snapped the pipe (10) into the socket (20), fitting or overmoulding a radially outer sleeve (40) which links a sheath (12) of the pipe to the snap-on connector fitting so as to block the pipe in a given angular position in this connector fitting and afford an external seal of the connection system (1).
